# EUROPEAN PATENT APPLICATION

(11) **EP 4 707 677 A1**
(43) Date of publication of application: **11.03.2026**
(21) Application number: 25194248.8
(22) Date of filing: 06.08.2025
(51) Int. Cl.: F23R 3/18

(54) **FLAMEHOLDER FOR A REHEAT ASSEMBLY**

(30) Priority: 06.09.2024 GB 202413081
(71) Applicant: Rolls-Royce plc, London N1 9FX (GB)
(72) Inventor: Powell, Ashley J, Derby DE24 8BJ (GB); Romero, Eduardo, Derby DE24 8BJ (GB)
(74) Representative: Rolls-Royce plc

(57) **Abstract**

There is provided a flameholder 370 for a reheat assembly 300, 300A of a gas turbine engine 10. The flameholder comprises an internal flow passageway 376 extending from an inlet aperture 374 and defining a flow direction F for flow through the flameholder 370. The internal flow passageway 376 is defined by an internal surface 34 of the flameholder 370. A grid of recesses 31 is formed in the internal surface 34 of the flameholder 370.

## Description

### CROSS REFERENCE TO RELATED APPLICATIONS

This represents the first application directed towards the subject-matter.

### FIELD

This disclosure relates to a flameholder for a reheat assembly. The disclosure further relates to: a reheat assembly comprising such a flameholder, a gas turbine engine comprising such a reheat assembly, and an aircraft comprising such a gas turbine engine.

### BACKGROUND

Conventionally, a reheat assembly may be provided to a gas turbine engine for the purpose of providing increased thrust. A reheat assembly increases thrust by injecting fuel into a flow of air which has been exhausted from a core of the gas turbine engine. The fuel is dispersed within the flow of air and mixes with the flow of air to form a fuel-air mixture within the flow of air prior to being entrained into a wake of a flameholder. Within the wake of the flameholder, the fuel-air mixture is combusted in a flame. The heat released by the flame reheats the flow of air from the core of the gas turbine engine and provides the required additional thrust. Radiative heat released by the flame also results in heating of nearby upstream components, including the flameholder.

### SUMMARY

According to a first aspect there is provided a flameholder for a reheat assembly of a gas turbine engine, the flameholder comprising:
an internal flow passageway extending from an inlet aperture and defining a flow direction for flow through the flameholder, the internal flow passageway defined by an internal surface of the flameholder; and
a grid of quadrilateral recesses formed in the internal surface, the grid being oriented so that diagonal directions of the recesses correspond to the flow direction. In an embodiment, the flameholder is in the form of a unibody.

In an embodiment, the recesses are separated by a lattice of septum walls.

In an embodiment, the grid is at least partially formed of intersecting rows and columns of recesses oriented along primary and secondary directions respectively, wherein diagonal directions of the recesses are oblique to both the primary and secondary directions.

In an embodiment, a base portion of each recess is planar.

In an embodiment, the recesses are separated by septum walls, and wherein the grid of recesses is configured so that flow through the flameholder shears off upstream septum walls to impinge on adjacent base portions of respective downstream recesses.

In an embodiment, a depth of the recesses varies along the flow direction.

In an embodiment: a lateral direction extends around the internal surface of the flameholder transverse to the flow direction; and a depth of the recesses varies along the lateral direction.

In an embodiment, the internal surface is defined by a plurality of sides, and wherein: at least two of the sides have respective grids of recesses; or the grid wraps around a junction between two of the sides.

In an embodiment, the flameholder is a product of additive layer manufacturing.

According to a second aspect there is provided a flameholder for a reheat assembly of a gas turbine engine, the flameholder being in the form of a unibody, wherein the flameholder comprises:
an internal flow passageway defined by the unibody and extending from an inlet aperture to an outlet aperture and defining a flow direction for flow through the flameholder, the internal flow passageway defined by an internal surface of the flameholder; and
a grid of recesses formed in the internal surface, the grid having a continuous extent along the flow direction, the continuous extent being at least 25 percent of a length of the internal flow passageway.

In an embodiment, the continuous extent is at least 50 percent of the length of the internal flow passageway. In an embodiment, the continuous extent is at least 75 percent of the length of the internal flow passageway.

In an embodiment, the continuous extent of the grid of recesses is free of any mounting structure, support structure or other fixtures for supporting an internally-mounted component within the internal surface, or for structurally supporting the internal surface itself.

In an embodiment, the grid of recesses is exposed to flow throughout the continuous extent.

In an embodiment, the recesses are quadrilateral recesses. In an embodiment, the grid is oriented so that diagonal directions of the recesses correspond to the flow direction.

In an embodiment, the recesses are separated by a lattice of septum walls.

In an embodiment, the grid is at least partially formed of intersecting rows and columns of recesses oriented along primary and secondary directions respectively, wherein diagonal directions of the recesses are oblique to both the primary and secondary directions.

In an embodiment, a base portion of each recess is planar.

In an embodiment, the recesses are separated by septum walls, and wherein the grid of recesses is configured so that flow through the flameholder shears off upstream septum walls to impinge on adjacent base portions of respective downstream recesses.

In an embodiment, a depth of the recesses varies along the flow direction. In an embodiment: a lateral direction extends around the internal surface of the flameholder transverse to the flow direction; and a depth of the recesses varies along the lateral direction.

In an embodiment, the internal surface is defined by a plurality of sides, and wherein: at least two of the sides have respective grids of recesses; or the grid wraps around a junction between two of the sides.

In an embodiment, the flameholder is a product of additive layer manufacturing.

According to a third aspect there is provided a reheat assembly for a gas turbine engine, the reheat assembly comprising:
a flameholder in accordance with the first aspect or the second aspect;
a jetpipe casing comprising:
   a reheat core section configured to convey a core flow of air from a reheat core inlet to a reheat core outlet; and
   a reheat bypass section configured to convey a bypass flow of air from a reheat bypass inlet to a reheat bypass outlet radially outward of the core section, the reheat core section and the reheat bypass section being radially separated at the reheat core inlet and the reheat bypass inlet by a support duct;
wherein the flameholder is mounted to the jetpipe casing and/or the support duct and is configured to receive a flow of air from the reheat bypass section via the inlet aperture.

According to a fourth aspect there is provided a gas turbine engine comprising:
a reheat assembly in accordance with the third aspect;
an engine core defining a core flow pathway; and
an outer casing which defines a bypass duct around the engine core; wherein:
   the jetpipe casing is attached to the outer casing and the support duct is radially aligned an outlet of the engine core so that:
      the reheat core inlet is aligned with an outlet of the core duct, and
      the reheat bypass inlet is aligned with an outlet of the bypass duct;
   the core flow pathway is configured to convey the core flow of air through the engine core to the reheat core inlet; and
   the bypass duct is configured to convey the bypass flow of air to the reheat bypass inlet.

In an embodiment, the bypass duct is configured to convey the bypass flow of air to the reheat bypass inlet without passing through the engine core.

According to a fifth aspect there is provided an aircraft comprising a gas turbine engine in accordance with the fourth aspect.

### BRIEF DESCRIPTION OF THE DRAWINGS

Embodiments will now be described by way of example only with reference to the accompanying drawings, in which:
FIG. 1 is a simplified top view of an aircraft comprising an airframe and a propulsion machine;
FIG. 2 is a sectional side view of a gas turbine engine;
FIG. 3 is a rear view of a reheat assembly;
FIG. 4 is a sectional side view of a reheat assembly;
FIG. 5 is a detailed perspective view of a flameholder forming part of the reheat assembly of FIG. 4;
FIG. 6 is a detailed top view of an internal surface of the flameholder of FIG. 5;
FIG. 7 is a cross-sectional view of the flameholder of FIG. 5;
FIG. 8 is a further detailed top view of the internal surface of the flameholder of FIG. 5;
FIG. 9 is a further is a cross-sectional view of the flameholder of FIG. 5;
FIG. 10 is a cut-through view of the internal surface of the flameholder of FIG. 5; and
FIG. 11 is a cut-through view of an internal surface of an alternative flameholder suitable for forming part of the reheat assembly of FIG. 4.

### DETAILED DESCRIPTION

### Aircraft

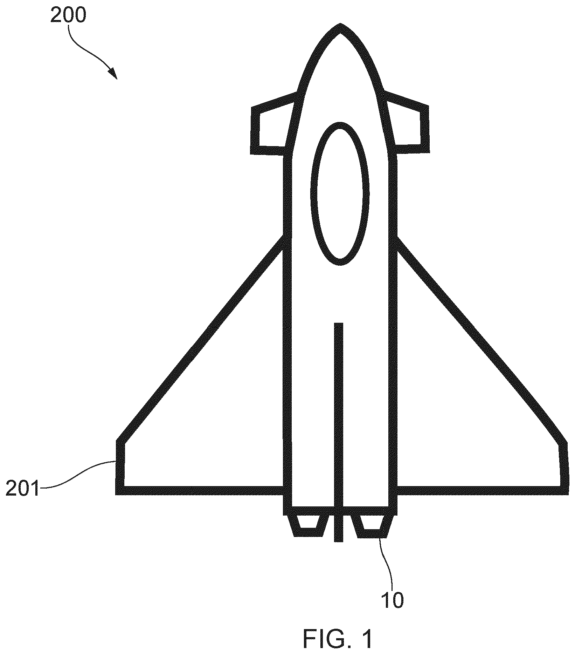

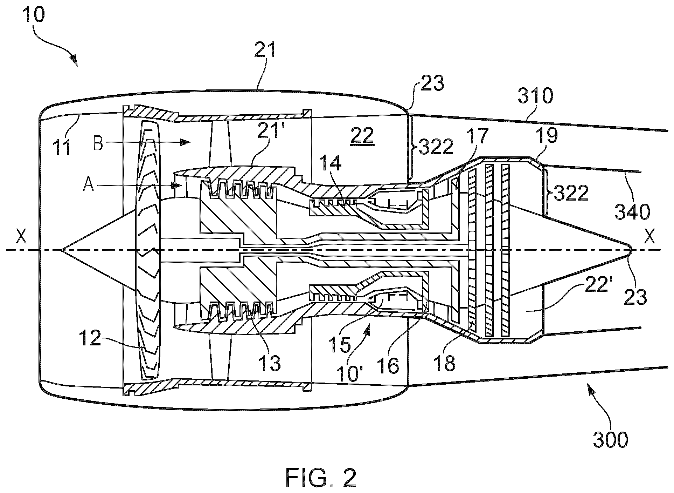

FIG. 1 shows a simplified and schematic view of an aircraft 200 comprising an airframe 201 and a gas turbine engine 10. The gas turbine engine 10 may be in accordance with the gas turbine engine 10 described below with reference to FIG. 2.

### Gas turbine engine

FIG. 2 shows a ducted fan gas turbine engine 10 having a principal and rotational axis X-X. The engine 10 generally comprises an air intake 11, a propulsive fan 12, and an engine core 10'. The engine core 10' comprises, in axial flow series, an intermediate pressure compressor 13, a high-pressure compressor 14, combustion equipment 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 21' defines a core duct 22', in which the engine core 10' is disposed, and further defines a core duct outlet 19.

During operation, air entering the intake 11 is accelerated by the fan 12 to produce two air flows: a core flow of air A into the engine core 10' and a bypass flow of air B which passes through the bypass duct 22 to provide propulsive thrust. The intermediate pressure compressor 13 compresses the core flow of air A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

### Reheat assembly

The gas turbine engine 10 further comprises a reheat assembly 300. The reheat assembly 300 is generally configured to inject fuel into the core flow of air A downstream of the low-pressure turbine 18 and optionally to inject fuel into the bypass flow of air B for the purpose of combustion therein, causing the core flow of air A or the bypass flow of air B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 defines a reheat core section 320 configured to duct the core flow of air A from a reheat core inlet 322 to a reheat core outlet 324, and a reheat bypass section 330 configured to duct the bypass flow of air B from a reheat bypass inlet 332 to a reheat bypass outlet 334. The reheat bypass section 330 is annular and disposed radially outwardly from the reheat core section 320 such that the reheat bypass inlet 332 is disposed radially outward of the reheat core inlet 322, while the reheat bypass outlet 334 is also disposed radially outward of the reheat core outlet 324. The support duct 340 at least partially separates the reheat bypass section 330 from the reheat core section 320 at the upstream end of the jetpipe casing 310.

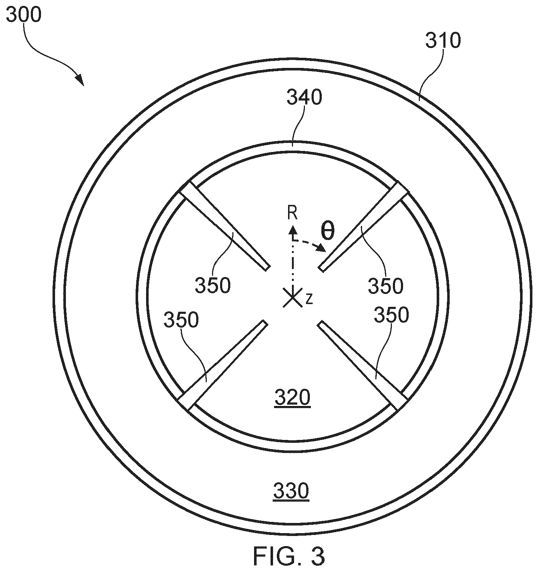

In this example, the gas turbine engine 10 comprises a plurality of reheat arrangements 350. Each reheat arrangement 350 is configured to enable the ignition of, and promote the stable formation of, a flame within the reheat assembly 300. In this example, the plurality of reheat arrangements 350 are circumferentially distributed around the jetpipe casing 310, as shown in FIG. 3 which shows a rear view of the reheat assembly 300. In other words, the plurality of reheat arrangements 350 are offset with respect to one another around a circumferential direction θ of the reheat assembly 300.

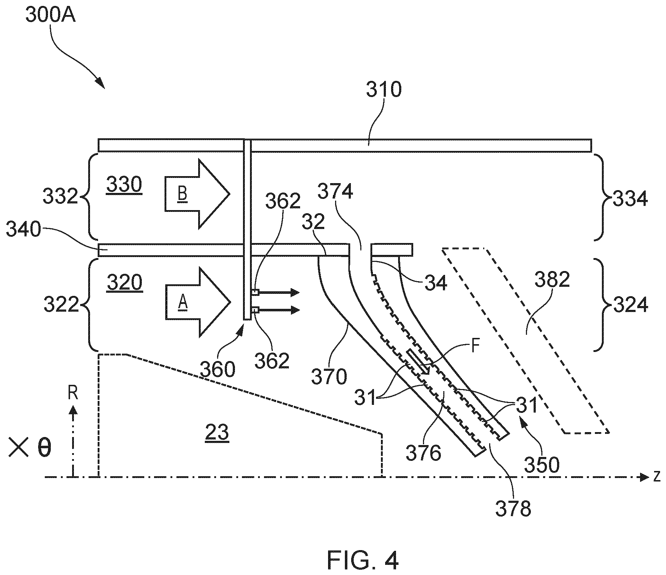

The plurality of reheat arrangements 350 are independently mounted to the jetpipe casing 310 so that they can be removed and replaced easily without requiring unnecessary removal and replacement of any other components. Although FIG.4 shows a total of four reheat arrangements 350 offset with respect to one another around the circumferential direction θ of the reheat assembly 300, it will be appreciated that there may be any suitable number of reheat arrangements, which may be offset with respect to one another around the circumferential direction θ of the reheat assembly 300 in this way. In other examples, there may be only a single reheat arrangement 350.

The jetpipe casing 310 defines an afterburning region 312 in the downstream end of the jetpipe casing 310 (downstream of the reheat arrangements 350) in which a core flow of air A and a bypass flow of air B from the reheat core section 320 and the reheat bypass section 330 respectively are able to mix, and in which fuel injected into the air streams is ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 21' such that the reheat core inlet 322 of the reheat assembly 300 is aligned with the core duct outlet 19.

Accordingly, the core duct 22' of the gas turbine engine 10 is configured to convey the core flow of air A through the engine core 10' to the reheat core inlet 322 and the bypass duct 22 of the gas turbine engine 10 is configured to convey the bypass flow of air B through the gas turbine engine 10 to the reheat bypass inlet 332, without passing through the engine core 10'.

In addition, the reheat assembly 300 may have any suitable combination of features described below with reference to the example reheat assembly 300A shown in sectional side view by FIG. 4.

The reheat assembly 300A has an axial direction Z, a radial direction R and a circumferential direction θ. Because FIG. 4 is a sectional side view of the reheat assembly 300A, the circumferential direction θ is defined through the plane of the page, whereas the axial direction Z and the radial direction R are defined according to the direction of the corresponding coordinate arrows provided by FIG. 4. The reheat assembly 300A is configured such that, when the reheat assembly 300A is incorporated into a gas turbine engine, the axial direction Z of the reheat assembly 300A aligns with a principal and rotational axis of the gas turbine engine. The jetpipe casing 310 defines the axial direction Z, the radial direction R and the circumferential direction θ of the reheat assembly 300A.

As explained with reference to FIGs. 2 and 4, the reheat assembly 300A comprises a plurality of reheat arrangements 350, with only one being shown in the sectional side view of FIG. 4.

Each reheat arrangement 350 comprises a radially extending flameholder 370. The flameholder 370 is radially extending in that it extends along a direction having a component which is parallel to the radial direction R of the reheat assembly 300A. The flameholder is mounted to the support duct 340, as described in further detail below.

The radially extending flameholder 370 is configured to instigate and to maintain a relatively low-speed eddy within the core flow of air A to form a wake-stabilised region 382 located downstream of the flameholder 370.

The reheat arrangement 350 further comprises a plurality of fuel injection ports including a plurality of core fuel injection ports 362 (only two are shown for simplicity). Each core fuel injection port 362 is configured to discharge a flow of fuel into the reheat core section 320 for mixing with the core flow of air A.

Each core fuel injection port 362 is located upstream of the wake-stabilised region 382. In this example, the plurality of fuel injection ports 362 are disposed on a separate fuel injection pipe which is located upstream of the flameholder 370 and is separately mounted to the jetpipe casing 310. Further, in this example, the core fuel injection ports 362 are located in the same circumferential plane defined by the axial direction Z and the radial direction R as the flameholder 370, such that the core fuel injection ports 362 are substantially circumferentially aligned with the flameholder 370. In some examples, there may be only a single core fuel injection port 362.

In this example, the plurality of fuel injection ports 362 are offset with respect to one another along a radial direction R of the jetpipe casing 310. This ensures that each fuel injection port 362 injects fuel into the jetpipe casing 310 at a different radial location.

The provision of a plurality of core fuel injection ports offset with respect to each other along the radial direction R of the jetpipe casing 310 enables better control of thrust produced by igniting the fuel in the core flow of air A. Similarly, the provision of the plurality of bypass fuel injection ports offset with respect to each other along the radial direction R of the jetpipe casing 310 enables further improved control of thrust produced by igniting the fuel injected into the bypass flow of air B.

In this example, each of the plurality of fuel injection ports 362 is configured to discharge the respective flow of fuel in a direction within the plane perpendicular to the axial direction Z of the jetpipe casing 310. In other examples, the discharge of fuel may not be fully perpendicular to the axial direction, but may be in a direction having a component perpendicular to the axial direction Z of the jetpipe casing 310 (i.e., not parallel to the axial direction Z). Discharging fuel in such a direction improves the mixing of the fuel in the air flow in which it is discharged, by increasing atomisation of the fuel (i.e., creating smaller droplets of fuel) due to the increased difference in relative velocity between the fuel being discharged and the core flow of air A and the bypass flow of air B respectively (i.e., due to the increase in shear stress between the fuel and the air, which shears the fuel into smaller droplets). In yet further examples, the discharge of fuel may be in a direction parallel to the axial direction Z of the jetpipe casing 310.

The reheat arrangement 350 further comprises a fuel supply system 360 configured to supply the flow of fuel to each of the fuel injection ports 362. The fuel supply system 360 is usable to control fuel discharge from the fuel injection ports 362 so as to vary the amount of additional thrust provided by the reheat assembly 300A and to vary the likelihood of ignition of the fuel. For example, if only limited additional thrust is needed, fuel discharge can be staged by leaving only a single radially innermost core fuel injection port 362 open. If a maximum amount of additional thrust is required, the control valves may be controlled to open fully for all of the fuel injection ports 362. The fuel discharge can also be staged circumferentially in each flameholder 370, for example by discharging fuel from only a single flameholder 370 when limited additional thrust is needed, compared to discharging fuel from all of the flameholders 370 around the circumference.

The reheat assembly 300A may be provided with a pilot (not shown) configured to cause ignition of the fuel within the wake-stabilised region 382. In other examples, the fuel may auto-ignite within the wake-stabilised region 382 due to the high temperatures of the air therein without the need for a pilot to be provided.

In this example, the at least one core fuel injection port 362 is separate from the flameholder 370 and is located upstream of the flameholder 370 such that a suitable distance between the fuel injection ports 362 and the radially extending flameholder 370 may be selected to select a suitable distance between the fuel injection ports 362 and the wake-stabilised region 382 along the axial direction Z. The distance between the fuel injection ports 362 and the radially extending flameholder 370 along the axial direction Z may be selected so as to ensure that the fuel within the core flow of air A does not reach the autoignition temperature prior to entering the wake stabilised region 382.

### Flameholder

The flameholder 370 comprises a flange portion 32 and an internal surface 34. The flange portion 32 is configured to facilitate attachment of the flameholder 370 to the support duct 340. Accordingly, the flange portion 32 has a shape which complements a shape of a local area of the support duct 340 to which the flameholder 370 is attached. The flange portion also defines an inlet aperture 374 configured to receive a cooling flow of air from the reheat bypass section 320. The flameholder 370 further defines an outlet aperture 378 which opens into the reheat core section 320.

The internal surface 34 defines an internal flow passageway 376 extending from the inlet aperture 374 to the outlet aperture 378. The internal flow passageway 376 is configured to convey the cooling flow of air from the inlet aperture 374 through an interior of the flameholder to the outlet aperture 378 for heat exchange between the flameholder 370 and the cooling flow of air. Once the cooling flow of air reaches the outlet aperture 378, it is discharged into the reheat core section 320. In this way, the internal flow passageway 376 defines a flow direction F for the cooling flow of air through the flameholder 370, and the inlet aperture 374 opens into the interior of the flameholder 370.

As best shown by FIG. 4, the flameholder 370 is inclined within the reheat core section 320 with respect to a direction of the core flow of air A. Namely, a part of a leading edge of the flameholder 370 adjacent to the inlet aperture 374 is more proximal to the reheat core inlet 322 than a part of the leading edge of the flameholder 370 adjacent to the outlet aperture 378. Likewise, a part of a trailing edge of the flameholder 370 adjacent to the inlet aperture 374 is more proximal to the reheat core inlet 322 than a part of the trailing edge of the flameholder 370 adjacent to the outlet aperture 378.

The flameholder 370 is in the form of a unibody, which may be produced by an additive layer manufacturing process such as powder bed fusion. A plurality of recesses 31 are formed in the internal surface 34 of the flameholder 370.

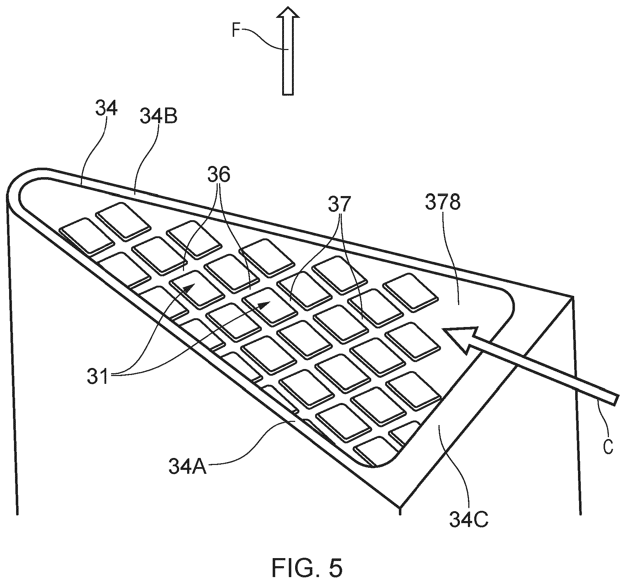

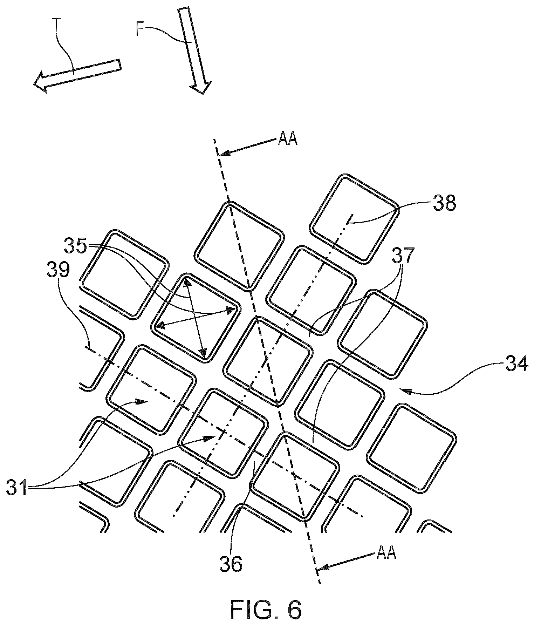

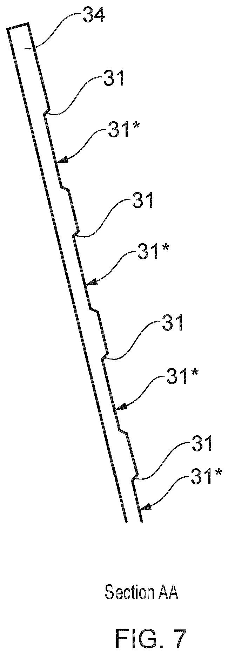

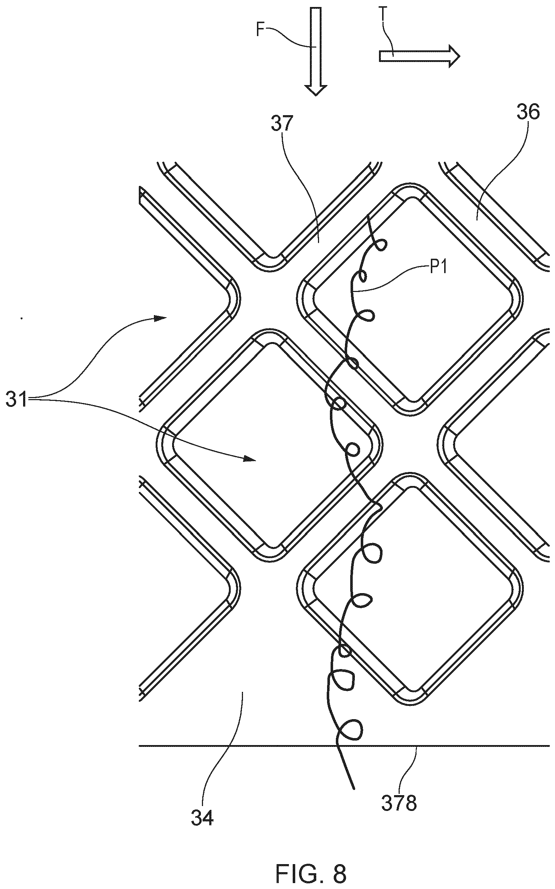

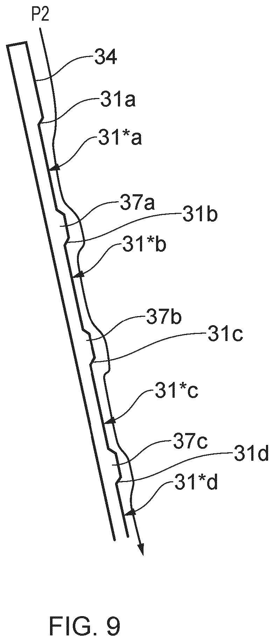

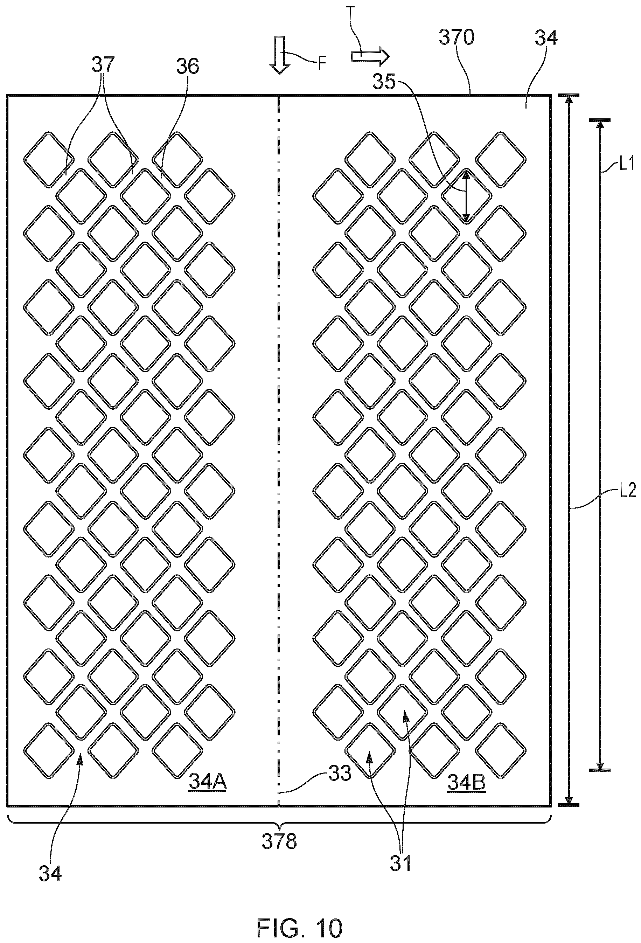

FIG. 5 shows a detailed perspective view of the flameholder 370 forming part of the reheat assembly 300A of FIG. 4 near the outlet aperture 378. FIG. 6 is a detailed top view of the plurality of recesses 31 formed in the internal surface 34 of the flameholder 370 of FIG. 5. FIG. 7 is a cross-sectional view of the flameholder 370 through Section AA indicated on FIG. 6. FIG. 8 is a further detailed top view of the plurality of recesses 31 formed in the internal surface 34 of the flameholder 370 of FIG. 5, with a flow pathline P1 representing a portion of the cooling flow of air through the internal flow passageway 376 being shown thereon. FIG. 9 is a further cross-sectional view of the flameholder 370 through Section AA indicated on FIG. 6, with another flow pathline P2 representing a portion of the cooling flow of air through the internal flow passageway 376 being shown thereon. FIG. 10 is a cut-through view of the internal surface 34 of the flameholder 370 shown by FIG. 5 as viewed in the direction indicated by arrow C on FIG. 5. The following description is provided with particular reference to FIGs. 4-10.

A lateral direction T of the flameholder 370 extends around the internal surface 34 of the flameholder 370 transverse to (e.g., orthogonal to) the flow direction F (as best shown in FIG. 6). In the specific example of FIGs. 5-10, the flameholder 370 has a substantially triangular cross-section in a plane through which the flow direction F passes. Namely, the flameholder 370 is made up of three sides 34A, 34B, 34C, each of which define a respective part of the internal surface 34. Two of the sides 34A and 34B are, when the flameholder 370 forms part of the reheat assembly 300A, relatively proximal to the reheat core inlet 322 (and so may be referred to as front sides 34A, 34B) whereas one of the sides 34C is relatively proximal to the reheat core outlet 324 (and so may be referred to as a rear side 34C). It will, however, be appreciated that flameholders 370 in accordance with the present disclosure have different cross-sections in the plane through which the flow direction F passes. In particular, the sides may be respective portions of a body (e.g., a unibody) of the flameholder, which may have a non-polygonal cross-section in the plane through which the flow direction F passes. If so, the sides may be angularly distributed portions of a curvilinear body of the flameholder 33.

The plurality of recesses 31 are arranged in the form of a grid. In the example of FIGs. 4-10, each recess 31 is quadrilateral (i.e., is a quadrilateral recess) in that it has four linear sides and four vertices (e.g., curved vertices which blend the adjacent sides with a curve). Accordingly, a cross-section of each recess 31 through a plane intersecting bounding walls of the recess (e.g. a plane parallel to a local tangent of the internal surface 34) is quadrilateral. Within the grid, the recesses 31 are separated by a lattice of septum walls 36, 37. The septum walls 36, 37 define the linear sides between adjacent recesses 31. Each recess 31 has two diagonal directions 35 extending between respective pairs of opposing vertices thereof. As shown in detail by FIG. 6, the grid of recesses 31 is formed of intersecting rows and columns of recesses 31. Each row of recesses 31 is disposed along (e.g., parallel to) a primary direction 38 while each column of recesses 31 is disposed along (e.g., parallel to) a secondary direction 39. The diagonal directions 35 of each recess are oblique to both the primary 38 and secondary directions 38, 39. The grid is oriented so that one of the diagonal directions 35 of each recess 31 corresponds to (e.g., is substantially aligned with, for example within 0-15 degrees of) the flow direction F. This specific arrangement of the grid of recesses 31 may be referred to as an "oriented crisscross" arrangement. The present disclosure also envisages that one or more of the recesses 31 are non-quadrilateral (e.g., are recesses having more than, or less than, four linear sides and four vertices).

The grid of recesses 31 functions to enhance cooling (e.g., convective cooling) of the flameholder 370 by promoting the formation and maintenance of localised turbulent flow proximal to the internal surface 34 of the flameholder 370.

The "oriented crisscross" arrangement of the grid of recesses 31 promotes the formation of relatively small secondary flow structures (e.g., recirculation) which increase a time of residence of the portion of the cooling flow of air in the base portion 31* of each recess 31. Such relatively small secondary flow structures are illustrated by the convoluted pathline P1 shown in FIG. 8. Consequently, the "oriented crisscross" arrangement of the grid of recesses 31 especially enhances cooling of the flameholder 370.

Further, the grid of recesses 31 may be configured so that a portion of the cooling flow of air through the flameholder 370 (i.e., a portion of the cooling flow of air proximal to the internal surface 34) shears off upstream septum walls 37a, 37b, 37c to impinge on adjacent base portions 31* of respective downstream recesses 31. As shown by the pathline P2 on FIG. 9, the portion of the cooling flow of air shears off a first septum wall 37a and then impinges on an adjacent base portion 31*b of a downstream recess 31b before shearing off a second septum wall 37b and subsequently impinging on an adjacent base portion 31*c of a further downstream recess 31c (with the terms upstream and downstream being defined with respect to the flow direction F). The portion of the cooling flow then shears off a third septum wall 37c and generally continues along the flow direction F in a similar manner thereafter. A width of the septum walls 36, 37 and/or a pitch between adjacent recesses 31 may be selected so that the cooling flow of air impinges on the base portions 31* as described above, which may be evaluated for any particular design by simulation (e.g., CFD simulation) or by monitoring heat transfer effects (e.g., by monitoring local thermal cooling using thermal imaging or other techniques).

As best shown by FIG. 7, a base portion 31* of each recess 31 is planar (e.g., substantially planar). The feature of the recesses 31 having planar base portions 31* provides effective cooling of the flameholder 370 while preserving a structural strength of the flameholder 370. Each recess 31 may be formed using an additive layer manufacturing process to produce locally thinned parts of the side 34A, 34B, 34C which defines the internal surface 34.

A continuous extent of the grid of recesses 31 along the flow direction F is indicated in FIG. 10 as L1. The extent of the grid of recesses 31 is continuous in that it is not interrupted (e.g., by locally thickened regions and/or internal supporting structures). Hence the grid of recesses 31 is exposed to flow throughout the continuous extent L1 thereof. More specifically, the continuous extent of the grid of recesses 31 is completely exposed to the cooling flow of air from the inlet aperture 374 to the outlet aperture 378 through the internal flow passageway 376 of the flameholder 370. Namely, the grid of recesses 31 is free of any mounting structure, support structure or other fixtures for supporting an internally-mounted component within the internal surface 34 or for structurally supporting the internal surface 34 itself. Accordingly, the grid of recesses 31 is free of such structures along the continuous extent L1 of the grid of recesses 31. As such, flow along the grid of recesses is uninterrupted by such structures, promoting the heat transfer effects discussed herein.

A length of the internal flow passageway 376 is indicated in FIG. 10 as L2. By producing the flameholder 370 in the form of the unibody using the additive layer manufacturing process, the continuous extent L1 of the grid of recesses 31 may be relatively lengthened (e.g., compared to previously considered manufacturing processes). Specifically, the continuous extent L1 of the grid of recesses 31 may be at least 25 percent of the length L2 of the internal flow passageway. Optionally, the continuous extent L1 of the grid of recesses 31 may be at least 50 percent, or at least 75 percent, of the length L2 of the internal flow passageway as shown by FIG. 10. Such a relatively long continuous extent of the grid of recesses 31 promotes more effective overall cooling of the flameholder 370 (e.g., by eliminating disruptions to the cooling flow of air proximal to the internal surface 34 and/or increasing a uniformity of cooling).

In the example of FIGs. 5 to 10, and as best shown by FIG. 10, two sides of the flameholder 370 have respective grids of recesses 31 as described herein. Specifically, a first of the front sides 34A has a first plurality of recesses 31 formed therein and arranged in the form of a first grid and a second of the front sides 34B has a second plurality of recesses 31 formed therein and arranged in the form of a second grid. The first and second grids of recesses are separated by a junction 33 between the two sides 34A, 34B. This arrangement provides that a structural strength of the junction 33 (which, when the flameholder 370 is incorporated within the reheat assembly 300, 300A, faces the reheat core inlet 322) is preserved and thus promotes a robustness of the flameholder 370.

Each recess 31 has a depth corresponding to a maximum deviation of the base portion 31* to a top of the adjacent septum wall(s) 36, 37 and/or the surrounding part of the internal surface 34. The depths of the recesses 31 define an effective height of the grid of recesses 31. The depth of the recesses 31 may vary along the flow direction F and/or the lateral direction T to vary the manner in which the formation/maintenance of localised turbulent flow proximal to the internal surface 34 of the flameholder 370 occurs in different parts of the flameholder 370. The cooling provided to the internal surface 34 of the flameholder 370 may, in this way, be tailored for optimal efficiency and/or effectiveness depending on the expected properties of the cooling flow of air passing through the internal flow passageway 376 and/or the operating conditions for the flameholder 370 (e.g., the thermal conditions within the reheat core section 320). For example, it may be that in one region of the internal surface 34 of the flameholder 370, the depth of the recesses 31 is about a first value while in another region of the internal surface, the depth of the recesses 31 is about a second value, with the second value being greater than the first value. Manufacture of the flameholder 370 using an additive layer manufacturing process reduces difficulties associated with creating such variations in geometrical properties of the recesses 31, since multiple machine paths or tooling would otherwise be required to create such variations using previously-considered processes.

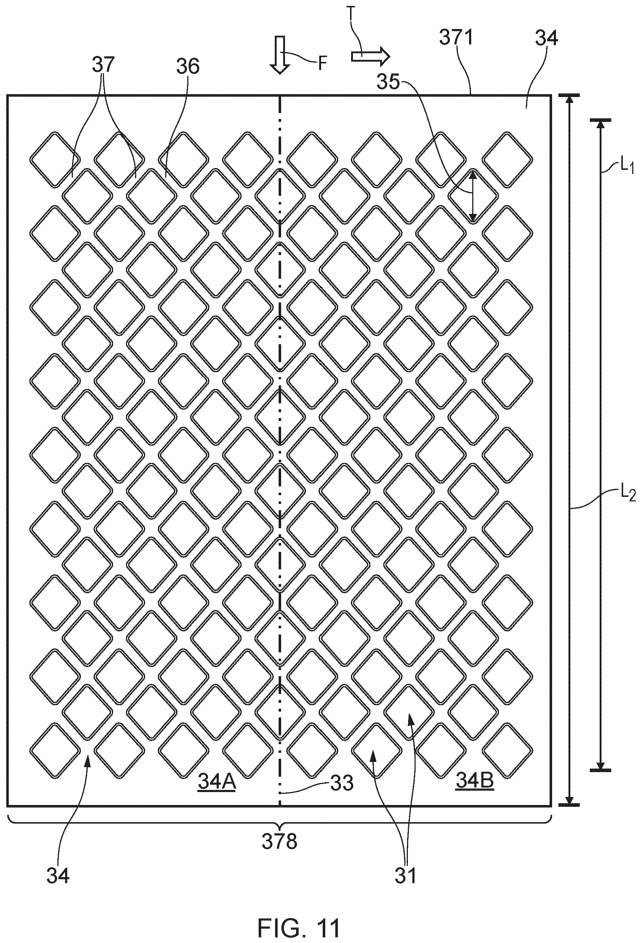

FIG. 11 is a cut-through view of an internal surface 34 of an alternative flameholder 371. The alternative flameholder 371 is generally similar to the flameholder 370 described above with reference to FIGs. 4-10, with like reference signs denoting common features. The alternative flameholder 371 may form part of the reheat assembly 300A of FIG. 4. The view of the alternative flameholder 371 shown by FIG. 11 corresponds to the view shown by FIG. 10 of the flameholder 370.

In contrast to the flameholder 370 described above with reference to FIGs. 4-10, in the flameholder 371 shown by FIG. 11, the grid of recesses 31 wraps around the junction 33 between the first front side 34A and the second front side 34B. That is to say that, in the flameholder 371, there is not two distinct grids of recesses 31 separated by the junction 33. This arrangement provides maximal cooling to the internal surface 34 of the flameholder 370, and the formation thereof is made more practical by the use of the additive layer manufacturing process.

As discussed above, flameholders in accordance with the present disclosure facilitate enhanced cooling thereof. As a result, flameholders in accordance with the present disclosure exhibit improved temperature capabilities. Namely, flameholders in accordance with the present disclosure may be able to safely/reliably operate in higher temperature environments, thus allowing for a gas turbine engine in which the flameholder is incorporated to be configured to operate at higher core temperatures (which, in turn, may result in an increased thrust output of the gas turbine engine).

Moreover, and in general, utilising an additive layer manufacturing method of form the flameholder (and in particular, the recesses in the internal surface of the flameholder) reduces an amount of tooling and/or a timescale for production.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A flameholder for a reheat assembly of a gas turbine engine, the flameholder comprising:
an internal flow passageway extending from an inlet aperture and defining a flow direction for flow through the flameholder, the internal flow passageway defined by an internal surface of the flameholder; and
a grid of quadrilateral recesses formed in the internal surface, the grid being oriented so that diagonal directions of the recesses correspond to the flow direction.

2. A flameholder for a reheat assembly of a gas turbine engine, the flameholder being in the form of a unibody, wherein the flameholder comprises:
an internal flow passageway defined by the unibody and extending from an inlet aperture to an outlet aperture and defining a flow direction for flow through the flameholder, the internal flow passageway defined by an internal surface of the flameholder; and
a grid of recesses formed in the internal surface, the grid having a continuous extent along the flow direction, the continuous extent being at least 25 percent of a length of the internal flow passageway.

3. The flameholder of claim 2, wherein the grid of recesses is exposed to flow throughout the continuous extent.

4. The flameholder of claim 2 or 3, wherein the recesses are quadrilateral recesses.

5. The flameholder of claim 4, wherein the grid is oriented so that diagonal directions of the recesses correspond to the flow direction.

6. The flameholder of any preceding claim, wherein the recesses are separated by a lattice of septum walls.

7. The flameholder of any preceding claim, wherein the grid is at least partially formed of intersecting rows and columns of recesses oriented along primary and secondary directions respectively, wherein diagonal directions of the recesses are oblique to both the primary and secondary directions.

8. The flameholder of any preceding claim, wherein the recesses are separated by septum walls, and wherein the grid of recesses is configured so that flow through the flameholder shears off upstream septum walls to impinge on adjacent base portions of respective downstream recesses.

9. The flameholder of any preceding claim, wherein a depth of the recesses varies along the flow direction.

10. The flameholder of any preceding claim, wherein:
a lateral direction extends around the internal surface of the flameholder transverse to the flow direction; and
a depth of the recesses varies along the lateral direction.

11. The flameholder of any preceding claim, wherein the internal surface is defined by a plurality of sides, and wherein:
at least two of the sides have respective grids of recesses; or
the grid wraps around a junction between two of the sides.

12. The flameholder of any preceding claim, wherein the flameholder is a product of additive layer manufacturing.

13. A reheat assembly for a gas turbine engine, the reheat assembly comprising:
the flameholder of any preceding claim;
a jetpipe casing comprising:
a reheat core section configured to convey a core flow of air from a reheat core inlet to a reheat core outlet; and
a reheat bypass section configured to convey a bypass flow of air from a reheat bypass inlet to a reheat bypass outlet radially outward of the core section, the reheat core section and the reheat bypass section being radially separated at the reheat core inlet and the reheat bypass inlet by a support duct;
wherein the flameholder is mounted to the jetpipe casing and/or the support duct and is configured to receive a flow of air from the reheat bypass section via the inlet aperture.

14. A gas turbine engine comprising:
the reheat assembly of claim 13;
an engine core defining a core flow pathway; and
an outer casing which defines a bypass duct around the engine core; wherein:
the jetpipe casing is attached to the outer casing and the support duct is radially aligned an outlet of the engine core so that:
the reheat core inlet is aligned with an outlet of the core duct, and
the reheat bypass inlet is aligned with an outlet of the bypass duct;
the core flow pathway is configured to convey the core flow of air through the engine core to the reheat core inlet; and
the bypass duct is configured to convey the bypass flow of air to the reheat bypass inlet.

15. An aircraft comprising the gas turbine engine of claim 14.
